# EUROPEAN PATENT SPECIFICATION

(11) **EP 3 296 383 B1**
(45) Date of publication and mention of the grant of the patent: **01.09.2021**
(21) Application number: 15892517.2
(22) Date of filing: 15.05.2015
(51) Int. Cl.: C12C 3/00, A23L 2/38, C12C 3/06, C12C 5/02

(54) **HOP PELLETS**
HOPFENPELLETS
PELLETS DE HOUBLON

(43) Date of publication of application: 21.03.2018
(73) Proprietor: Suntory Holdings Limited, Osaka-shi, Osaka 530-8203 (JP)
(72) Inventor: INUI, Takako, Osaka 618-0001 (JP); MATSUI, Hiroo, Kyoto 619-0284 (JP)
(74) Representative: Vossius & Partner Patentanwälte Rechtsanwälte mbB
(86) International application number: PCT/JP2015/064045
(87) International publication number: WO 2016/185516

(56) References cited:
- EP-A1- 2 749 634
- EP-A2- 0 104 160
- US-A1- 2004 121 040
- US-A1- 2007 254 063
- DANIEL SHARP ET AL: "Effect of Harvest Maturity on the Chemical Composition of Cascade and Willamette Hops", JOURNAL OF THE AMERICAN SOCIETY OF BREWING CHEMISTS., vol. 72, no. 4, 1 January 2014 (2014-01-01), pages 231-238, XP055438252, US ISSN: 0361-0470, DOI: 10.1094/ASBCJ-2014-1002-01
- HIDEO MIYACHI ET AL. BEER JOZO GIJUTSU 28 December 1999, pages 29 - 66, XP009504667
- SHARP DANIEL C. ET AL.: 'Effect of Harvest Maturity on the Chemical Composition of Cascade and Willamette Hops' JOURNAL OF THE AMERICAN SOCIETY OF BREWING CHEMISTS vol. 72, no. 4, 01 January 2014, pages 231 - 238, XP055438252 DOI: 10.1094/ASBCJ-2014-1002-01
- KAMMHUBER, K.: 'Untersuchungen zur Biogenese der aetherischen Oele des Hopfens' MONATSSCHRIFT FUER BRAUWISSENSCHAFT vol. 53, no. 7 - 8, 2000, pages 138 - 142, XP009504634
- None

## Description

### TECHNICAL FIELD

The present invention relates to hop pellets. More specifically, the present invention relates to hop pellets usable in the production of beer-taste beverages, such as beers, a method for producing the hop pellets, and a method for producing a beer-taste beverage or hop-containing composition made from hop pellets as raw materials.

### BACKGROUND ART

In beer-taste beverages, raw materials such as malts or hops greatly influence their qualities. Hops, for example, not only give bitterness to beer-taste beverages but also give refreshing hoppy aroma and a body. Bitterness is attributable to an α-acid or the like in the hops, hoppy aroma attributable to terpenes or the like, and a body attributable to polyphenols or the like, so that each of them is attributable to various ingredients. However, since hops are agricultural products, it has been understood that the differences in quality are caused by cultivation factors, storage conditions after harvest, or the like.

For example, in Non-Patent Publication 1, analysis of the relationships between the climates of each plant year and α-acid, attributive to a bitterness ingredient has been carried out, with respect to Saaz hops. It has been confirmed from the data that the values of the α-acid, which is attributable to a bitterness ingredient, are greatly fluctuated by the climactic factors such as temperature, humidity and the number of sunshine days.

In addition, Non-Patent Publication 2 studies on what effects do maturity of hops and harvest time points have on qualities of the hops, and the results on Cascade and Willamette hops are disclosed. Specifically, the constituents of hops were measured for hops that are harvested at a total of 3 time points: a time point 10 to 14 days prior to the commercial harvest time (Early), on the commercial harvest date (Typical), and a time point 5 to 10 days after the commercial harvest date (Late). As a result, the publication describes that there were no significant differences by the harvest time points for α-acids, β-acids, and cohumulone contents, and significant differences were found for these contents by the cultivation conditions and the like of each of the harvested years. On the other hand, an aroma oil ingredient was smaller in those that were Early in harvest time points than those that were Typical and Late in time points.

Further, Non-Patent Publication 3 points out the matter that a highest value of the essential oil ingredient of hops appears after reaching the highest in bitterness, and the results for Hallertauer (Hallertaua) Mittelfrueh, Fuggle, and Saaz hops are disclosed. Specifically, Hallertauer and Fuggle hops that were harvested on August 18, August 31, and September 9 showed increase in linalool, which is attributive to an aroma oil ingredient, with time, and Saaz hops that were harvested on August 18 and 31, and September 9 showed a gradual decrease in linalool, so that the relationships between linalool contents and earliness or lateness of the hop harvest date were not consistent depending upon varieties.

On the other hand, Patent Publication 1 discloses that by using frozen raw hops or powdered products thereof as hop raw materials without having to dry after harvest, a highly fragrant fermented malt beverage having a floral, green-grass-like, fresh aroma, richly containing linalool or the like, which is an aroma ingredient of fresh raw hops, and containing HDE (Humulene Diepoxide) formed by oxidation of hops or the like, which is controlled to a very small amount.

Patent Publication 2 discloses that a fermented alcoholic beverage abundantly containing hoppy aroma ingredients can be produced by maturing hop flowers which were dried after harvest at a medium to low temperature of from 10° to 20°C for 3 or more months, thereby significantly accelerating oxidation reaction for the formation of the aroma ingredient in the hop flowers, so that the aroma ingredients contained in the hops are increased, and moreover perspiration odor or other unwanted oxidation odor ingredient, and resin-like odor, or the like can be significantly controlled. Also, Patent Publication 3 discloses that during the production of the matured hops, post-matured hops that gives mild bitterness in which bitterness and tastiness (*umami*) are harmonized can be produced by adjusting the proportion of a specified bitterness ingredient and/or specified aroma ingredient as an index (see, Patent Publication 3).

Furthermore, Patent Publication 4 discloses that the content of a flavonoid or phenolic ingredient in the plant can be increased by subjecting a plant to a sprinkling treatment or the like with a growth regulatory compound derived from a group of acylcyclohexanedione compounds.

Patent Publication 5 relates to a method for producing a beer-taste beverage, wherein hop is added based on hop plant age.

### RELATED ART REFERENCES

### PATENT PUBLICATIONS

Patent Publication 1: Japanese Patent Laid-Open No. 2004-81113
Patent Publication 2: Japanese Patent Laid-Open No. 2007-89439
Patent Publication 3: Japanese Patent Laid-Open No. 2008-228634
Patent Publication 4: Japanese Patent Laid-Open No. 2006-52217
Patent Publication 5: EP Patent Application No. 2 749 634

### NON-PATENT PUBLICATIONS

Non-Patent Publication 1: Krofta et al., Mathematical Model for Prediction of Alpha Acid Contents from Meteorological Data for 'Saaz' Aroma Variety, Proceedings of the Second International Humulus Symposium(ISBN:978 90 6605 722 7) 2009, 131-139
Non-Patent Publication 2: Daniel C. Sharp et al., Effect of Harvest Maturity on the Chemical Composition of Cascade and Willamette Hops, J. Am. Soc. Brew. Chem., 72(4):231-238, 2014
Non-Patent Publication 3: Beer Jozo Gijutsu (Beer Brewery Techniques), December 28, 1998, First Edition, Hideo MIYACHI, p48

### SUMMARY OF THE INVENTION

### PROBLEMS TO BE SOLVED BY THE INVENTION

However, Non-Patent Publication 1 does not report on the aroma ingredient or the body ingredient, so that the variances in the qualities of hop raw materials that influence the qualities of beer-taste beverages and causations thereof (cultivation factors) are not elucidated in detail. Also, while Non-Patent Publication 2 describes that the hops that are harvested in a later time point in the harvest are rich in the aroma ingredients, the hops are not generally available in the markets, and there is also a risk of not satisfying the aroma quality for a beer-taste beverage obtained using the hops due to degradation of the hop qualities. Furthermore, it is clear from Non-Patent Publication 3 that the tendencies of the harvest dates and the contents of the aroma ingredients are different depending upon the varieties of the hops, so that it can be seen that the relationships between the harvest dates and the hop qualities are not consistent.

In addition, in a case where hops are subjected to some sorts of treatments during growth or after harvest, apparatuses or facilities for the treatments are needed to be separately furnished, so that there are some problems that the operations are complicated and economically disadvantageous.

Remarking on "external appearance" of hops as one of the factors for adjusting qualities of hops, and elucidating the influences thereof on the qualities of the beer-taste beverages, an object of the present invention is to provide hop pellets from which desired beer qualities can be stably produced, a method for producing the hop pellets, and a method for producing a beer-taste beverage or hop-containing composition made from the hop pellets as raw materials.

### MEANS TO SOLVE THE PROBLEMS

Usually hop pellets are produced after collecting a large number of hops harvested at various harvest time points by hop producers in different farm fields in one produce area and blending the hops. In order to solve the above problems, the present inventors have prepared hop pellets selectively gathering only slightly golden colored hops which hop producers are usually likely to keep a respectful distance as degraded products in external appearance among the gathered hops of a Saaz variety, and produced into a beer-taste beverage. As a result, interesting findings have happened to be obtained that the beer-taste beverage also has excellent aroma quality. In view of the above, the present inventors have further studied including a used ratio of golden colored hops or the like, and as a result, when pellets are prepared by using a given level or more of hop flowers showing particular hues, a beer-taste beverage obtained using the pellets is excellent in the aspect of richly containing a monoterpene especially linalool, which is attributable to a splendid aroma (floral), and the present invention has been perfected thereby.

The present invention relates to the following [1] to [4]:
[1] Hop pellets obtained by using 20% by weight or more of hop flowers (L•SL) of a Saaz variety as raw materials, the hop flowers showing hues satisfying that a value of a* is -0.5 or more and a value of b* is 25 or more in accordance with a CIE Lab color space.
[2] A method for producing hop pellets as defined in the above [1], characterized by the use of 20% by weight or more of hop flowers (L•SL) of a Saaz variety as raw materials, the hop flowers showing hues satisfying that a value of a* is -0.5 or more and a value of b* is 25 or more in accordance with a CIE Lab color space.
[3] A method for producing a beer taste beverage characterized by the use of hop pellets as defined in the above [1].
[4] A method for producing a hop-containing composition characterized by the use of hop pellets as defined in the above [1].

### EFFECTS OF THE INVENTION

The beer-taste beverage obtained by using the hop pellets of the present invention is excellent in the aspect of richly containing monoterpenes, especially linalool, myrcene, or the like, which is considered to be attributable to splendid aroma (floral).

### BRIEF DESCRIPTION OF THE DRAWINGS

[FIG. 1] FIG. 1 is a set of graphs showing numerical values for each of coordinates in accordance with CIE Lab color space and CIE Lch color space for every harvest time points of hops.
[FIG. 2] FIG. 2 is a graph showing sensory evaluation results (sweetness) of beers obtained using hop flowers having different harvest time points.
[FIG. 3] FIG. 3 is a graph showing sensory evaluation results (hoppy aroma of beer) of beers obtained using hop flowers having different harvest time points.

### MODES FOR CARRYING OUT THE INVENTION

The hop pellets of the present invention are characterized in that hop flowers of a Saaz variety (denoted as "hop flowers (L•SL)"), showing hues satisfying that a value of a* is -0.5 or more and a value of b* is 25 or more in accordance with a CIE Lab color space, are used in an amount of 20% by weight or more. In the present specification, the hop flowers may be hereinafter simply referred to as "hops." Here, when the ranges are given by using "-(to)" as used herein, it is considered to include the numbers at both ends thereof.

In general, hops are started to be harvested from the day at which the amount of α-acids is at its maximum as a harvest initial date, and the harvest is ended usually in 25 days or so. In addition, the hops undergo yellowing in external appearance with the passage of time, and the hops with poorer external appearance have been known to have lowered dealing prices in the markets as compared to those with excellent external appearance. Accordingly, the hop producers try front-loading the harvest schedule to harvest as much as possible in more excellent quality, even it is within a usual harvest time point, for example, within 15 days from the harvest initial date in many cases. Therefore, the amount of hops with poorer external appearance that are harvested at the end of the time point and distributed to the markets would be very small. However, the present inventors have found that by increasing a used ratio by blending hops that are considered to be poorer in external appearance with ordinary hops with excellent external appearance to provide hop pellets, surprisingly, a beer-taste beverage using the hop pellets obtained as a raw material exhibit excellent tastiness. In other words, the present invention is based on the selection and use of the hop flowers (L•SL) of a Saaz variety with hues in which a value of a* and a value of b* as indices in accordance with CIE Lab color space take specified numerical values, among the hops that are harvested after the ordinary harvest time point, preferably from 15 to 50 days or so from the harvest initial date, as hops having poorer external appearance. Here, the hues of the hop flowers as used herein refer to hues of hop flowers that are dried and powdered, which can be evaluated, for example, by a method described in Examples set forth below.

The hops of a Saaz variety as used herein are hops of a Saaz variety produced in Czech Republic, which may include bracts and leaves, and are not particularly limited so long as at least a lupulin part of the hop flowers is included.

The hop flowers of a Saaz variety which is considered to have excellent external appearance has a value of a* in accordance with the CIE Lab color space of 0 or a negative number, for example, less than -0.5, and the earlier the harvest time point, a hue leaning towards green is shown. In addition, the commercially available hop pellets of a Saaz variety have a value of a* of a negative number, which is usually from -0.8 to -1.2 or so. On the other hand, the hop flowers (L•SL) used in the present invention have a value of a* of -0.5 or more, and preferably -0.2 or more, showing a hue leaning towards red.

In addition, the hop flowers of a Saaz variety have a value of b* in accordance with the CIE Lab color space showing a positive number, regardless of whether or not the external appearance is excellent; however, the numerical values fluctuate as the harvest time points are delayed but certain tendencies could not be found. In any case, a hue leaning towards yellow is shown. The hop flowers (L•SL) used in the present invention have a value of b* of 25 or more, and preferably 29 or more. Here, the commercially available hop pellets of a Saaz variety have a value of b* of a positive number, which is usually from 29 to 35 or so.

The hop flowers (L•SL) used in the present invention have a value of a* and a value of b* in accordance with the CIE Lab color space of the above numerical values, and the hop flowers of a Saaz variety have a value of L* in accordance with the CIE Lab color space of a positive number; however, the numerical values fluctuate as the harvest time points are delayed but certain tendencies could not be found. In any case, lightness is high. The hop flowers (L•SL) used in the present invention have a value of L* of preferably 55 or more. Here, the commercially available hop pellets of a Saaz variety have a value of L* of a positive number, which is usually from 50 to 65 or so.

In addition, when the hop flowers of a Saaz variety are expressed by CIE Lch color space, which is different from the CIE Lab color space, a value of c* in accordance with the CIE Lch color space is a positive number; however, the numerical values fluctuate as the harvest time points are delayed but certain tendencies could not be found. In any case, chroma is high. The hop flowers (L•SL) used in the present invention have a value of c* of preferably 30 or more. Here, the commercially available hop pellets of a Saaz variety have a value of c* of a positive number, which is usually from 29 to 35 or so.

The value of h in accordance with the CIE Lch color space of the hop flowers of a Saaz variety in a positive number becomes smaller as the harvest time point is delayed, and the value abruptly drops in the latter half of the harvest time point. The hop flowers (L•SL) used in the present invention have a value of h of preferably 75° or more, and more preferably 78° or more, and preferably 90.5° or less, and more preferably 88° or less. Here, the value of h in accordance with the CIE Lch color space refers to a hue angle, and the commercially available hop pellets have a value of h of usually from 91° to 95° or so.

The hop pellets of the present invention are not particularly limited in other raw materials, so long as the hop flowers (L•SL) having hues as defined above are used as raw materials. The amount of the hop flowers (L•SL) used of the above hues in the entire raw materials is
20% by weight or more, and preferably 50% by weight or more, from the viewpoint of richly containing monoterpenes, especially linalool, myrcene, or the like, which are attributable to splendid aroma (floral etc.) in beer-taste beverages, and the amount used is preferably 100% by weight or less, more preferably 90% by weight or less, and even more preferably 80% by weight or less, from the viewpoint of stably furnishing the hop pellets of the present invention in large amounts. Usually hop pellets are produced after collecting a large number of hops harvested at various harvest time points by hop producers in different farm fields in one produce area and blending the hops. The hop flowers (L•SL) of the above hues have hop external appearance leaning towards red and slightly yellowing color, so that a brilliant green tone of hops is lost, so that the hop producers would be likely to keep a respectful distance as degraded products in external appearance. For this reason, unless the hop flowers (L•SL) of the above hues are selectively gathered and prepared, the amount of the hop flowers (L•SL) used of the above hues in the entire raw materials would not be 20% by weight or more.

In addition, the hop pellets of the present invention are not limited in the method for production thereof, so long as the hop flowers (L•SL) having hues as defined above are used as raw materials in a specified amount. For example, raw materials containing hop flowers (L•SL) having hues as defined above may be pelletized with a tableting machine.

In general, in order to prevent the hops from going wrong after harvest, the hops are dried to drive out water content. The water content which is present in an amount of about 80% upon harvest is stored after reducing the water content to 15% or less, and preferably 11% or less. The drying is carried out at 65°C or lower, and preferably 60°C or lower. In the present invention, it is desired to use hop flowers (L•SL) with a water content reduced to preferably 15% or less, and more preferably 11% or less, from the viewpoint of not allowing richly contained linalool to oxidize. On the other hand, it is desired to use hop flowers (L•SL) having a water content of preferably 9% or more, and more preferably 10% or more, from the viewpoint of not causing damages such as splitting of dried hops.

The hop pellets of the present invention thus obtained have a value of a* in accordance with a CIE Lab color space of preferably -0.5 or more, and more preferably -0.2 or more, and preferably 4 or less, and more preferably 3.5 or less. The hop pellets have a value of b* in accordance with a CIE Lab color space of preferably 25 or more, and more preferably 29 or more, and preferably 40 or less, and more preferably 36 or less. In addition, the hop pellets have a value of h in accordance with a CIE Lch color space of preferably 75° or more, and more preferably 78° or more, and preferably 90° or less, and more preferably 87° or less. In addition, the above values are subject to fluctuate depending upon the amount of the hop flowers (L•SL) used, and it is preferable that the values are within those mentioned above.

The present invention also provides a method for producing hop pellets, characterized by the use of 20% by weight or more of hop flowers (L•SL) of a Saaz variety in the hop flowers as raw materials, the hop flowers showing hues satisfying that a value of a* is -0.5 or more and a value of b* is 25 or more in accordance with a CIE Lab color space. Here, use of the hop flowers as the raw materials means a total amount of the hop flowers used as raw materials.

In the method for producing hop pellets of the present invention, so long as the hop flowers (L•SL) of the hues defined above are used in a specified amount as raw materials, references can be made and used to the section of hop pellets of the present invention, as to the kinds, amounts, and used proportions of raw materials, and method of pelletization and the like.

In addition, the present invention provides a method for producing a beer-taste beverage characterized by the use of hop pellets of the present invention.

The term "beer-taste beverage" as used herein refers to a carbonated beverage having a beer-like flavor. In other words, unless specified otherwise, the beer-taste beverage in the present specification embraces all the carbonated beverages having beer flavor, regardless of the presence or absence of a fermentation step with an yeast. Specific examples include beers, *Happoushu* (low-malt beers), other miscellaneous liquors, liqueurs, nonalcoholic beverages and the like.

The method for producing a beer-taste beverage of the present invention can be carried out in accordance with usual methods known to one of ordinary skill in the art except for the inclusion of the step of using the hop pellets of the present invention. For example, raw materials such as at least one member selected from the group consisting of *mugi* such as malts, other grains, starches, and sugars, and optionally a bittering agent, a dye, or the like are supplied to a mashing kettle or tun, an enzyme such as amylase is optionally added to allow gelatinization or saccharification, thereafter husks or the like are removed by filtration to give a wort, the hop pellets of the present invention are then added to the wort obtained, and boiled, solid contents such as coagulated protein are removed in a clearing tank to give a clear wort. As the conditions for these saccharification step, boiling-and-clarifying step, solid content-removing step, and the like, those of known ones may be used.

Next, in a case of an alcoholic beverage, the alcoholic beverage can be produced by adding an yeast to a clear wort obtained above to allow fermentation, and optionally removing the yeast with a filtration apparatus or the like (also referred to as fermentation step). As the fermentation conditions, those of known ones may be used. Also, the hop flowers (L•SL) in the present invention selected above after the beginning of fermentation or the hop pellets containing those hop flowers may be added. Alternatively, raw materials having an alcoholic ingredient such as spirits may be added in place of going through a fermentation step. Further, an alcoholic beer-taste beverage can be obtained by going through the steps of adding a stored liquor and optionally carbon dioxide gas, and subjecting to filtration and container filling, and optionally sterilization.

On the other hand, in a case of a nonalcoholic beverage, the nonalcoholic beverage can be produced by going through the steps of, for example, subsequent to the above solid content-removing step, directly storing a clear wort obtained above, adding a carbon dioxide gas thereto, subjecting to filtration and container filling, and optionally sterilization, without having to go through a fermentation step. Alternatively, a nonalcoholic beer-taste beverage can also be obtained, subsequent to the fermentation step of the above alcoholic beverage, by reducing an alcohol concentration by a known method such as beer film treatment or dilution.

Thus, by the use of the hop pellets of the present invention, an excellent effect that a beer-taste beverage which is excellent in the aspect of richly containing monoterpenes, especially linalool, myrcene or the like, attributive to splendid aroma (floral etc.), can be efficiently produced is exhibited.

Also, the present invention provides a method for producing a hop-containing composition characterized by the use of the hop pellets of the present invention.

The term "hop-containing composition" as used herein refers to a composition extracted from the hop pellets of the present invention, and further embraces a secondary processed product of the composition. One example includes a hop extract using ethanol as a solvent, a hop extract using a carbon dioxide gas as a solvent (including hop extracts obtained using dried carbon dioxide in a subcritical state or a supercritical state as a solvent (Japanese Patent Nos. 3,155,003 and 3,513,877)), hop processed products such as isomerized hops, reduced hops, low hop, Hexa Hop, and Tetra Hop.

### EXAMPLES

The present invention will be specifically described hereinbelow by the Examples, without intending to limit the scope of the present invention to the following Examples.

### Test Example 1 - Hues of Hop Flowers

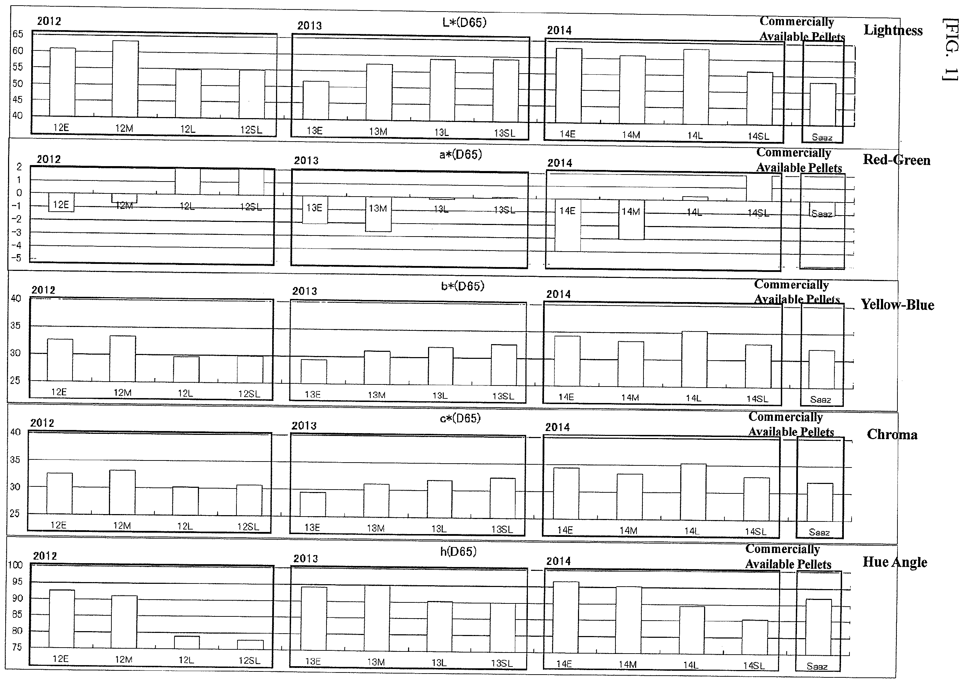

As to the hop raw materials (variety: Saaz, area of produce: Czech Republic) produced in the years 2012, 2013, and 2014, the harvested hop raw materials were grouped in the order of the time points of harvest as follows: "Group E" is those hop raw materials harvested on the harvest initial date, "Group M" is those hop raw materials harvested 10 days from the harvest initial date, "Group L" is those hop raw materials harvested 25 days from the harvest initial date, and "Group SL" is those hop raw materials harvested 50 days from the harvest initial date. Hues were measured in accordance with the following conditions. Here, the harvest fiscal year and the harvest time points are expressed as a denotation of a combination of the last two digits of the harvest fiscal year together with the harvest time points to show groupings. For example, "Group L" produced in 2013 would be denoted as "13L." In addition, as the pretreatment of the samples, the dry hop flowers of each of the groups were milled with a coffee mill, and the powdered product was directly used in the measurement. The measurement results are shown in Table 1 and FIG. 1. As commercially available hop pellets of a Saaz variety, a similar evaluation was also made on pelletized products of a mixture of hops from various fields harvested in the year 2013.

### < Measurement Conditions for Hues >

Color Space: CIE Lab color space
Measurement Instrument: Spectrocolorimeter CM-2002, manufactured by Minolta
Field Angle: 10° Field of View
Light Source: D65
Analyzing Software: SpectraMagic NX, manufactured by Minolta

### [Table 1]

**Table 1**

| Group Name | L*(D65) | a*(D65) | b*(D65) | c*(D65) | h(D65) |
|---|---|---|---|---|---|
| 12E | 60.90 | -1.44 | 32.51 | 32.54 | 92.53 |
| 12M | 63.33 | -0.65 | 33.25 | 33.25 | 91.12 |
| 12L | 54.79 | 5.90 | 29.64 | 30.22 | 78.74 |
| 12SL | 54.91 | 6.50 | 29.91 | 30.61 | 77.74 |
| 13E | 51.81 | -2.13 | 29.37 | 29.45 | 94.14 |
| 13M | 57.11 | -2.64 | 31.05 | 31.16 | 94.87 |
| 13L | 58.93 | -0.15 | 31.85 | 31.85 | 90.27 |
| 13SL | 59.14 | 0.08 | 32.45 | 32.45 | 89.86 |
| 14E | 62.95 | -4.01 | 34.19 | 34.42 | 96.69 |
| 14M | 60.89 | -3.05 | 33.23 | 33.37 | 95.25 |
| 14L | 63.06 | 0.29 | 35.32 | 35.32 | 89.54 |
| 14SL | 56.37 | 2.64 | 32.86 | 32.97 | 85.40 |
| Commercially Available Pellets, Year'13 | 53.05 | -1.09 | 32.02 | 32.04 | 91.95 |

From Table 1 and FIG. 1, "Group 12L," "Group 12SL," "Group 13L," "Group 13SL," "Group 14L," and "Group 14SL" had a value of a* in accordance with a CIE Lab color space of -0.5 or more, which was greatly different from other groups. In addition, "Group 12L," "Group 12SL," "Group 13L," "Group 13SL," "Group 14L," and "Group 14SL" had a value of h in accordance with a CIE Lch color space of from 77.74° to 90.27°, which was greatly different from those of "Group E" and "Group M," respectively, in the comparisons within the same fiscal year. Accordingly, it can be seen that all of "Group 12L," "Group 12SL," "Group 13L," "Group 13SL," "Group 14L," and "Group 14SL" are found to have numerical differences as compared to other groups, so that these groups are different in external appearance from those harvested in other time points.

Here, while Non-Patent Publication 2 measured the constituents for the hops harvested at a total of 3 time points: a time point 10 to 14 days prior to the commercial harvest time (Early), on the commercial harvest date (Typical), and a time point 5 to 10 days after the commercial harvest date (Late), it has been already discussed that the non-patent publication describes the points that there were hardly any differences by the harvest time points for α-acids, β-acid, and cohumulone, which are attributive to bitterness ingredients, but the yearly cultivation conditions or the like were greatly affected, and that the aroma oil ingredients are smaller in those that were Early in the harvest time points, as compared to those that were Typical and Late in the time points. However, the hops with a later harvest time point give results such that the hues are reddish in color, and show an external appearance of a golden-yellowish color. However, any relationships between hues and flavors of the beer-taste beverages cannot be read off from Non-Patent Publication 2.

### Test Example 2 - Bitterness Ingredient and Aroma Ingredients of Hop Flowers

As to the hop flowers that were grouped in the same manner as in Test Example 1, the pretreatment was carried out in the same manner as in Test Example 1, and the contents of the bitterness ingredient and the aroma ingredients were then measured in accordance with the following conditions. Here, the denotation of the groupings of hops is the same as in Test Example 1. In addition, those that are subjected to pelletization processing in the same manner as in Test Example 1 were evaluated in the same manner as commercially available hop pellets of a Saaz variety. The measurement results are shown in Table 2.

### < Measurement Conditions for Bitterness Ingredients >

The quantification analyses for α-acids, β-acid, and cohumulone in the hop raw materials were carried out in accordance with a method described in Method 7.7 of "Analytica-EBC" as prescribed in the analysis method published by the EBC (European Brewery Convention).

### < Measurement Conditions for Aroma Ingredients >

As the quantification analysis of the aroma (essential oil) ingredient of the hop raw materials, a total content of the essential oil ingredient was quantified by a steam distillation method described in "ASBC Methods of Analysis" as prescribed in the analysis method published by the ASBC (The American Society of Brewing Chemists). The essential oil obtained was further subjected to quantification analysis of each of the aroma ingredients by GC-MS (TIC Mode) under the following conditions.

### [Conditions for GC-MS]

Capillary Column: DB-WAX, manufactured by J & W, length 60 m, inner
diameter: 0.25 mm, film thickness: 0.5 µm
Oven Temperature: Raising the temperature from 40°C to 240°C at a rate of 6°C/minute, and holding thereat for 20 minutes
Carrier Gas: He
Gas Flow Rate: 1.5 mL/min
Transfer Line Temperature: 240°C
MS Ion Source Temperature: 230°C
MS Quadrupolar Temperature: 150°C
Front Inlet Temperature: 240°C

### [Table 2]

**Table 2**

| Group Name | α-Acid, % | β-Acid, % | Ratio of Cohumulone, % | Linalool, mg/kg | Myrcene, mg/kg |
|---|---|---|---|---|---|
| 12E | 3.0 | 4.2 | 36.6 | 11.1 | 1,173 |
| 12M | 2.7 | 4.8 | 36.9 | 17.2 | 1,352 |
| 12L | 3.3 | 5.0 | 37.0 | 30.5 | 3,025 |
| 12SL | 3.3 | 4.8 | 37.8 | 26.2 | 2,422 |
| 13E | 3.5 | 4.4 | 23.0 | 23.0 | 1,335 |
| 13M | 3.6 | 4.5 | 23.0 | 27.6 | 1,841 |
| 13L | 3.0 | 4.3 | 25.0 | 51.5 | 3,439 |
| 13SL | 3.4 | 4.6 | 23.0 | 58.2 | 3,723 |
| 14E | 2.6 | 5.4 | 22.1 | 16.3 | 1,545 |
| 14M | 2.9 | 5.3 | 23.3 | 27.1 | 2,818 |
| 14L | 3.5 | 5.9 | 24.0 | 48.4 | 5,463 |
| 14SL | 2.7 | 5.4 | 25.4 | 39.8 | 4,452 |
| Commercially Available Pellets, Year'13 | 2.2 | 3.2 | 24.0 | 16.8 | 1,693 |

From Table 2, as to the bitterness ingredients, α-acid, β-acid, and cohumulone, fluctuations in the contents due to differences in harvest time points of harvest have not been found from the comparisons within the same fiscal year. On the other hand, as to the aroma ingredients linalool and myrcene, "Group 12L," "Group 12SL," "Group 13L," "Group 13SL," "Group 14L," and "Group 14SL" were greatly different from those of "Group E" and "Group M," respectively, in the comparisons within the same fiscal year, showing high contents. Accordingly, it can be seen that the same tendencies as in Non-Patent Patent Publication 2 are shown.

### Test Example 3 - Sensory Evaluation of Beers

### < Production of Beers>

To 100 L of a filtered wort obtained by a usual method was added each of hop pellets composed of powdered products of hop flowers of "Group 13E," "Group 13M" or "Group 13L" used in Test Example 1 after preparation. After stirring for one minute, the wort was subjected to whirlpool rest, and rapidly cooled, to prepare a cold wort. An yeast was added to allow fermentation, a mixture was filtered, and a carbon dioxide gas pressure was then adjusted, to produce a beer.

### < Sensory Evaluation >

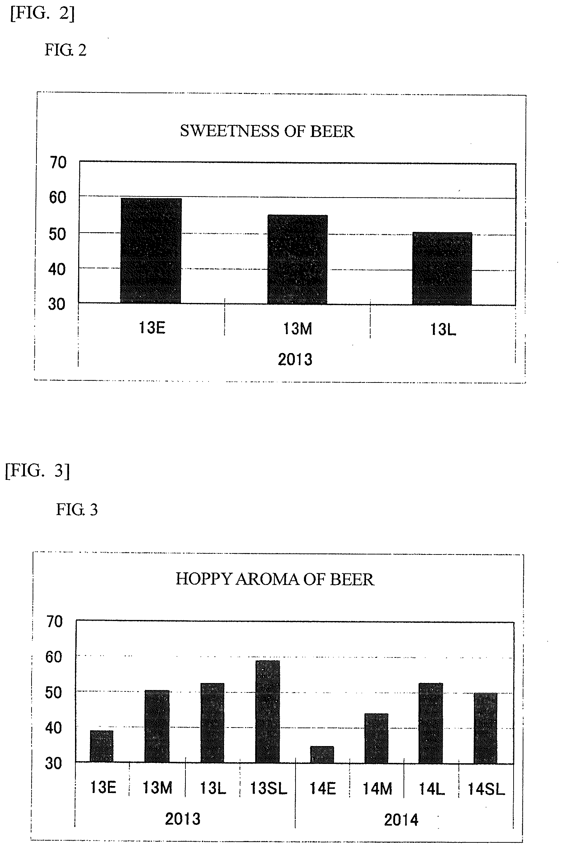

The flavor of the beer obtained was evaluated by a sensory test according to a scoring method. Five well trained sensory evaluators were asked to evaluate on sensory comparisons on flavor features and tastes of the hops for the produced beers. For each of the flavor features, the intensity was comparatively evaluated with scores with 0.1 points increments from score 0 to score 3. Since the sensory score width would differ depending upon the panelists, samples were normalized so that an average score of all the samples for one panelist is 50 and a standard deviation is 10 to conduct comparisons between the samples. The evaluation results on "sweetness" are shown in FIG. 2, and the evaluation results for "hoppy aroma of beer" are shown in FIG. 3.

As is clear from FIG. 2, "Group 13L" had less "sweetness," as compared to "Group 13E" and "Group 13M." In addition, as is clear from FIG. 3, "Group 13L" was rich in "hoppy aroma of beer," as compared to "Group 13E" and "Group 13M." In other words, "Group 13L" of Examples of the present invention had a bitterness ingredient in the same level as ordinary hops, richly contained an aroma oil ingredient (linalool), had rich "hoppy aroma of beer," and further had a less taste-giving factor called "sweetness." Although "sweetness" is a factor that acts positively to flavor of beer, for example, it may act synergistically with sweetness derived from malts to give excessive sweetness, which may in turn act negatively as an overall beer flavor. By providing properties that are different from ordinary hops, it is made possible to give a breadth to the beer making by providing properties that are different from ordinary hops by way of use from ordinary hops, or a combined use thereof.

### INDUSTRIAL APPLICABILITY

The hop pellets of the present invention make it possible to give a breadth to the beer making by providing properties that are different from ordinary hops by way of use from ordinary hops, or a combined use thereof, so that a new taste can be provided as a luxurious product.

## Claims

1. Hop pellets obtained by using 20% by weight or more of hop flowers (L•SL) of a Saaz variety as raw materials, the hop flowers showing hues satisfying that a value of a* is -0.5 or more and a value of b* is 25 or more in accordance with a CIE Lab color space.

2. The hop pellets according to claim 1, wherein a value of h satisfies from 75° to 90.5° in accordance with a CIE Lch color space of the hop flowers (L•SL).

3. A method for producing hop pellets as defined in claim 1 or 2, **characterized by** the use of 20% by weight or more of hop flowers (L•SL) of a Saaz variety as raw materials, the hop flowers showing hues satisfying that a value of a* is -0.5 or more and a value of b* is 25 or more in accordance with a CIE Lab color space.

4. A method for producing a beer taste beverage **characterized by** the use of hop pellets as defined in claim 1 or 2.

5. A method for producing a hop-containing composition **characterized by** the use of hop pellets as defined in claim 1 or 2.

## Patentansprüche

1. Hopfenpellets, erhalten durch die Verwendung von 20 Gew.-% oder mehr an Hopfenblüten (L•SL) einer Saaz-Sorte als Rohmaterialien, wobei die Hopfenblüten Farbtöne aufweisen, welche genügen, dass ein Wert von a* -0,5 oder mehr und ein Wert von b* 25 oder mehr, gemäß einem CIE-Lab-Farbraum, beträgt.

2. Die Hopfenpellets gemäß Anspruch 1, wobei ein Wert h 75° bis 90,5°, gemäß einem CIE-Lch-Farbraum der Hopfenblüten (L•SL) erfüllt.

3. Ein Verfahren zur Herstellung von Hopfenpellets wie in Anspruch 1 oder 2 definiert, **gekennzeichnet durch** die Verwendung von 20 Gew.-% oder mehr an Hopfenblüten (L•SL) einer Saaz-Sorte als Rohmaterialien, wobei die Hopfenblüten Farbtöne aufweisen, welche genügen, dass ein Wert von a* -0,5 oder mehr und ein Wert von b* 25 oder mehr, gemäß einem CIE-Lab-Farbraum, beträgt.

4. Ein Verfahren zur Herstellung eines Getränks mit Biergeschmack, **gekennzeichnet durch** die Verwendung von Hopfenpellets wie in Anspruch 1 oder 2 definiert.

5. Ein Verfahren zur Herstellung einer Hopfen enthaltenden Zusammensetzung, **gekennzeichnet durch** die Verwendung von Hopfenpellets wie in Anspruch 1 oder 2 definiert.

## Revendications

1. Pellets de houblon obtenus par utilisation de 20 % en poids ou plus de fleurs de houblon (L•SL) d'une variété Saaz en tant que matières premières, les fleurs de houblon présentant des nuances satisfaisant à une valeur a* de -0,5 ou plus et une valeur b* de 25 ou plus conformément à un espace colorimétrique CIE Lab.

2. Pellets de houblon selon la revendication 1, dans lequel une valeur h satisfait de 75° à 90,5° conformément à un espace colorimétrique CIE Lch des fleurs de houblon (L•SL).

3. Méthode pour produire des pellets de houblon tels que définis dans la revendication 1 ou 2, **caractérisée par** l'utilisation de 20 % en poids ou plus de fleurs de houblon (L•SL) d'une variété Saaz en tant que matières premières, les fleurs de houblon présentant des nuances satisfaisant à une valeur a* de -0,5 ou plus et une valeur b* de 25 ou plus conformément à un espace colorimétrique CIE Lab.

4. Méthode de production d'une boisson au goût de bière, **caractérisée par** l'utilisation de pellets de houblon tels que définis dans la revendication 1 ou 2.

5. Méthode de production d'une composition contenant du houblon, **caractérisée par** l'utilisation de pellets de houblon tels que définis dans la revendication 1 ou 2.
